# EUROPÄISCHE PATENTSCHRIFT

(11) **EP 0 774 396 B1**
(45) Veröffentlichungstag und Bekanntmachung des Hinweises auf die Patenterteilung: **28.07.1999**
(21) Anmeldenummer: 96116627.9
(22) Anmeldetag: 17.10.1996
(51) Int. Cl.: B62B 1/14

(54) **Transportroller**
Transport cart
Chariot de transport

(30) Priorität: 18.10.1995 DE 19538714
(43) Veröffentlichungstag der Anmeldung: 21.05.1997
(73) Patentinhaber: LEIFHEIT Aktiengesellschaft, D-56377 Nassau (DE)
(72) Erfinder: Fischer, Klaus-Jürgen, 56379 Holzappel (DE); Ohm, Heinz Josef, 65550 Limburg (DE)

(56) Entgegenhaltungen:
- EP-A- 0 132 461
- GB-A- 883 470

## Beschreibung

Die Erfindung bezieht sich auf einen Transportroller gemäß dem Oberbegriff des Anspruchs 1.

Nach der EP-B1-0 132 461 ist ein Transportroller bekannt, der auf einem Tragrahmen über Hinterschnittaufnahmen einen Behälter, bei dem der Bodenbereich als steife Kunststoffwanne ausgebildet ist, trägt. Der Behälter ist über die Hinterschnittaufnahmen und Rastteile auf dem unteren Rahmenbereich und der Achse aufgeklippst. Da der Behälter häufig, insbesondere zum Transport im Auto und zum Entladen zu Hause vom Tragrahmen abgenommen werden muß, hat die Praxis gezeigt, daß das erneute Befestigen des Behälters auf dem Tragrahmen recht schwierig ist, weil die Kunststoffwanne genau auf den unteren Rahmenbereich aufgesetzt werden muß. Dazu ist eine gewisse Geschicklichkeit und auch Übung erforderlich.

Die Erfindung hat sich nunmehr die Aufgabe gestellt, einen Tranportroller mit einem an einem Tragrahmen zu befestigenden Behälter zu schaffen, der jederzeit leicht und ohne besondere Geschicklichkeit abgenommen und wieder sehr schnell kraftschlüssig aufzusetzen ist. Dieser Vorgang soll ohne Kraftanstrengung, ohne Bücken und irgendwelches Wenden des Gerätes möglich sein.

Diese Aufgabe wird mit den kennzeichnenden Merkmalen des Anspruchs 1 gelöst. Durch die spezielle Ausbildung der Hinterschnittaufnahmen in Verbindung mit dem Schieber wird erreicht, daß die Vertikal- und Horizontalkräfte getrennt aufgenommen werden. Dadurch ist keine klemmende, sondern nur noch eine formschlüssige Anordnung notwendig. Es ist zum Befestigen des Behälters auf dem Tragrahmen keine Kraft mehr erforderlich. Der Behälter wird lediglich auf den unteren Rahmenbereich und die Achse aufgeschoben und anschließend über den Schieber verriegelt.

Weitere Ausgestaltungen der Erfindung sind den Unteransprüchen zu entnehmen. So ermöglicht die V-förmige Anordnung der beiden Schenke des unteren Tragrahmenbereiches ein besonders einfaches und leichtes Einschieben des Behälters in die Querrinne. Die Bedienung wird weiter vereinfacht durch die Anordnung des Schiebers in der rückwärtigen Wand der Kunststoffwanne und durch die Ausbildung als Fußraste.

Ein Ausführungsbeispiel der Erfindung wird im folgenden anhand der Zeichnungen näher erläutert. Es zeigen:

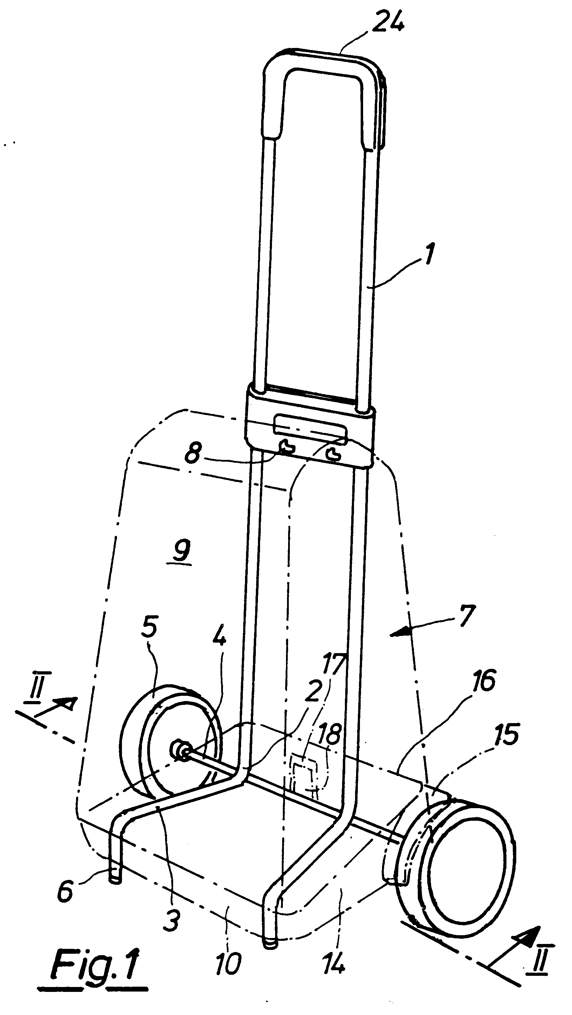

- Figur 1: eine Gesamtansicht eines Transportrollers mit einem Behälter,

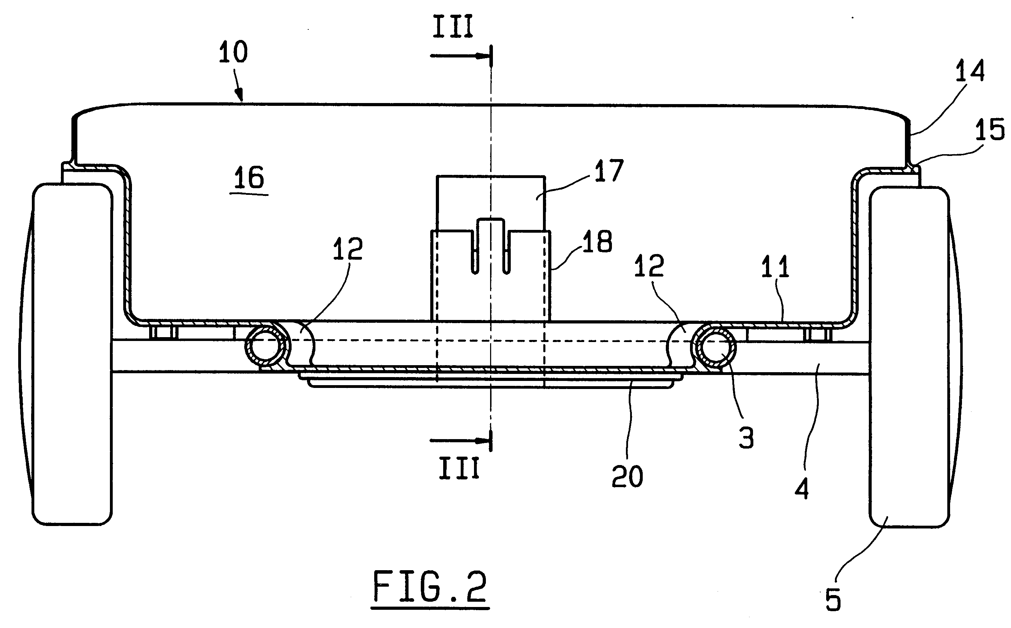

- Figur 2: einen Schnitt gemäß der Linie II-II in Figur 1 und
- Figur 3: einen Schnitt gemäß der Linie III-III nach Figur 2.

An einem Tragrahmen 1 ist am Übergangsbereich 2 zu einem unteren Tragrahmenbereich 3 eine Achse 4 mit Laufrädern 5 angeordnet. Der untere Tragrahmenbereich 3 läuft in Stützfüße 6 aus. Auf dem unteren Tragrahmenbereich 3 ist ein Behälter 7 aufgesetzt, der über ein Halteelement 8 am Tragrahmen 1 befestigt ist.

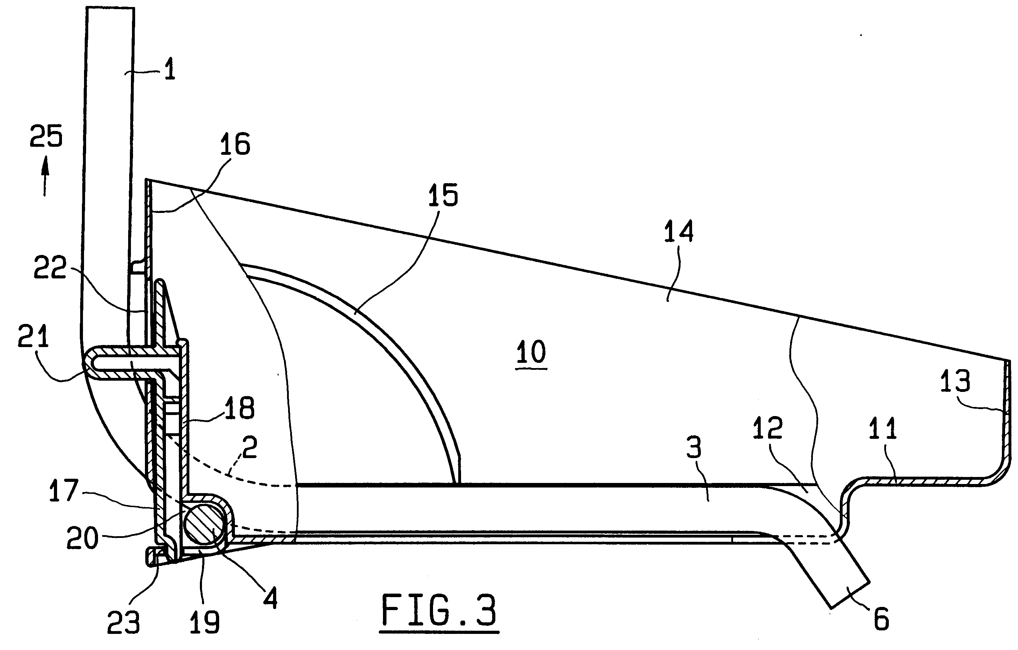

Der Behälter 7 besteht aus einem Taschenkörper 9, der direkt an einer Kunststoffwanne 10 befestigt ist. Die Kunststoffwanne 10 setzt sich aus einem Boden 11 mit Hinterschnittaufnahmen 12, einem Vorderteil 13, zwei Seitenteile 14 mit Kotflügeln 15 und einer rückwärtigen Wand 16 zusammen. In der rückwärtigen Wand 16 ist der Schieber 17 senkrecht verstellbar angeordnet. Die Führung 18 für den Schieber 17 ist einstückig mit der Wand 16 hergestellt; der Schieber 17 greift im verriegelten Zustand, in Figur 3 dargestellt, in einen verlängerten Rastschenkel 19, der die Achse 4 untergreifenden Querrinne 20 ein. Der Schieber 17 durchdringt mit einer Fußraste 21 die Wand 16 und ist in dieser zusätzlich in einem Schlitz 22 geführt. Der Schieber 17 greift im Rastschenkel 19 in einen Halteschlitz 23 ein. Dieser Halteschlitz 23 dient gleichzeitig als Verrastung, um ein Lösen des Schiebers bei Erschütterungen zu verhindern.

Die Hinterschnittaufnahmen 12 sind im Boden 11 ebenso wie die Querrinne 20 eingeformt und ebenfalls als etwa u-förmige Rinnen ausgeführt. Sie verlaufen entsprechend dem Tragrahmenbereich 3 V-förmig und sind seitwärts offen.

Zum Trennen des Behälters 7 vom Tragrahmen 1 ist es lediglich erforderlich, die Fußraste 21 in Richtung 25 zu verschieben, so daß die Querrinne 20 seitwärts offen ist. Der Behälter muß dann lediglich mit dem Fuß etwas nach vorne gedrückt werden, bis der Rastschenkel 19 vor die Achse 4 zum Liegen kommt, wodurch durch die V-förmige Anordnung des Tragrahmenbereiches 3 auch die Hinterschnittaufnahmen 12 diesen Rahmenbereich freigeben und der Behälter abgenommen werden kann. Zum Wiederaufsetzen des Behälters wird in umgekehrter Reihenfolge verfahren, wobei der Behälter lediglich auf den Tragrahmenbereich 3 aufgesetzt und dann Richtung Achse bis zum Anschlag verschoben wird. Da keine Klemmung, sondern nur eine formschlüssige Aufnahme erfolgt, ist zu diesem Vorgang kein weiterer Kraftaufwand erforderlich.

## Patentansprüche

1. Transportroller mit einem an einem Tragrahmen (1) über Hinterschnittaufnahmen (12) kraftschlüssig aber lösbar befestigten Behälter (7), bei dem zumindest der Bodenbereich als steife Kunststoffwanne (10) ausgebildet ist, dadurch gekennzeichnet, daß die Hinterschnittaufnahmen (12) als seitwärts offene, im Querschnitt etwa U-förmige Rinnen ausgeführt sind, und daß zum Verschließen zumindest einer Rinne ein Schieber (17) vorgesehen ist.

2. Transportroller nach Anspruch 1, dadurch gekennzeichnet daß im Behälter (7) zwei V-förmig entsprechend der beiden Schenkel des unteren Tragrahmenbereiches (3) verlaufende Rinnen, an die sich eine eine Achse (4) untergreifende Querrinne (20) anschließt, vorgesehen sind.

3. Transportroller nach Anspruch 1 und 2, dadurch gekennzeichnet, daß der Schieber (17) in der rückwärtigen Wand (16) der Kunststoffwanne (10) die Querrinne (20) verschließend, angeordnet ist.

4. Transportroller nach Anspruch 3, dadurch gekennzeichnet, der Schieber (17) mit einer Fußraste (21) versehen ist.

## Claims

1. Transport cart having a container (7) which is fastened non-positively but detachably to a supporting frame (1) via undercut retainers (12), in which cart at least the floor region is designed as a rigid plastic tub (10), characterized in that the undercut retainers (12) are designed as channels which are open sideways and are approximately U-shaped in cross section, and in that a slide (17) is provided to close at least one channel.

2. Transport cart according to Claim 1, characterized in that two channels are provided in the container (7), which channels run in a V shape corresponding to the two legs of the lower supporting-frame region (3) and are adjoined by a transverse channel (20) which engages under an axle (4).

3. Transport cart according to Claims 1 and 2, characterized in that the slide (17) is arranged in the rear wall (16) of the plastic tub (10) in a manner such that it closes the transverse channel (20).

4. Transport cart according to Claim 3, characterized in that the slide (17) is provided with a foot latch (21).

## Revendications

1. Chariot de transport avec un conteneur (7) fixé par engagement positif mais de façon amovible sur un châssis de support (1) par l'intermédiaire de logements en contre - dépouille (12), conteneur dont au moins la partie de fond est conçue sous forme de bac en matière plastique (10), caractérisé en ce que les logements en contre - dépouille (12) sont conçus sous la forme de gorges de section transversale sensiblement en U, ouvertes latéralement et en ce qu'il est prévu une barre (17) pour la fermeture d' au moins une gorge.

2. Chariot de transport selon la revendication 1, caractérisé en ce que dans le conteneur (7) sont prévues deux gorges s'étendant en forme de V de façon correspondante aux deux branches de la partie de châssis de support inférieur (3) auxquelles est raccordée une gorge latérale (20) emprisonnant un axe (4) par le dessous.

3. Chariot de transport selon les revendications 1 et 2, caractérisé en ce que la barre (17) obturant la gorge transversale (20) est disposée dans la paroi arrière du bac en plastique (10)..

4. Chariot de transport selon la revendication 3, caractérisé en ce que la barre (17) est munie d'un repose - pied (12).
